# EUROPEAN PATENT APPLICATION

(11) **EP 4 819 563 A1**
(43) Date of publication of application: **07.10.2026**
(21) Application number: 25305490.2
(22) Date of filing: 03.04.2025
(51) Int. Cl.: H04L 41/14, H04L 41/084, H04L 41/0226

(54) **SYSTEM AND METHOD FOR RUNTIME CONFIGURATION OF A NETWORK PROTOCOL BRIDGE DEVICE**

(71) Applicant: Commissariat à l'Energie Atomique et aux Energies Alternatives, 75015 Paris (FR)
(72) Inventor: NGUYEN, Quang-Duy, 91191 Gif-sur-Yvette Cedex (FR); DHOUIB, Saadia, 91191 Gif-sur-Yvette Cedex (FR)
(74) Representative: Atout PI Laplace

(57) **Abstract**

A system for runtime configuration of a Network Protocol Bridge 'NPB' device (114) to be used in a network, the network comprising a plurality of devices operating under different communication protocols, the system comprising a computer device (100) configured to run a model design tool (102), wherein the model design tool allowing to design a NPB model (104) describing the NPB device, the computer device (100) being further configured to generate in a single operation two distinct software components (106, 110) from the NPB model, wherein a first software component (106) comprises code instructions for allowing implementation of a Digital Twin of the NPB device, and a second software component (110) comprises code instructions for allowing configuration of the NPB device at runtime by the first software component.

## Description

### Field of the Invention

The present invention relates to the field of network and system engineering, and more particularly, the invention relates to the generation of a Network Protocol Bridge (NPB) component with an associated Digital Twin (DT), the latter working as a configuration tool at runtime for the NPB component.

### Background Art

Software-Defined Networking (SDN) is an advanced technological concept popular since 2010s and will still be widely-used in the Industry 4.0 and 5.0. As one knows, the Software-Defined Networking (SDN) architecture separates a network into control plane and data plane. The physical network devices, also called "agents" in the SDN context, are in the data plane and can just focus on the data exchange. A core element at the control plane is a SDN controller that enables centralized management and control and that manages physical network devices (switch, access point, router, etc.) at runtime. A SDN architecture consists of Southbound APIs that relay information between the SDN controller and individual network devices (such as switches, access points, routers), and of Northbound APIs that relay information between the SDN controller and applications used by network administrators, such that a SDN controller looks like a single logical network device.

The management of a SDN controller includes many actions, such as monitoring networking data (throughput, error rate, latency etc.), enabling/dis-enabling network devices' features (e.g. change a Quality of Service (QoS) configuration or security, etc.), or configuring routing data flows.

Several SDN controllers are available in the market, for example NEON from the Applicant, ONOS, OpenDayLight, Beacon, Maestro, NOX-MT, etc.

Besides the SDN controllers, there exist network configuration tools which also follow the principles of a control-data separation.

A first requirement for these configuration tools, currently named network configurators, is that they need to be able to communicate with network devices. In other words, network configurators and network devices must use same network protocols, for example OpenFlow, HTTP/HTTPS, Websocket, etc.

A second requirement for these configuration tools is that the network devices should have an Application Programming Interface (API) opened to the network configurators to share a semantic of the configurable elements of the network devices. In other words, network configurators must have enough information to know how to configure the network devices.

Without fulfilling these two requirements, a network configurator cannot manage network devices.

Traditional approaches demand much effort to network engineers to configure network devices and network configurators so that they use same network protocols and APIs.

To respect the two above requirements and allow network devices and a network configurator to communicate, network administrators have sometimes no other alternative than buying network devices of the same brand as the one of an existing network configurator (or vice-versa).

In view of the aforementioned drawbacks, there is a need for improved network configurators.

The present invention offers a solution to this need.

### Summary of the invention

An object of the present invention is a method for deploying a Network Protocol Bridge (NPB) component with an associated NPB Digital Twin (DT) component, wherein the Digital Twin is set to functionally act as a network configurator for the NPB component.

An innovative feature of the present invention relies on an approach that applies a separation of a network into a control plane and a data plane in a quick and flexible way, using a code generation from a same model.

Advantageously, by using a control-data separation strategy the performance and flexibility of a NPB component is improved.

A NPB component as described in the context of the invention is a NPB software that runs on a NPB computer, and that can bridge two or several different network protocols so that two or more devices in a network using different network protocols can communicate and work together.

A NPB Digital Twin as generated by the method of the invention associated to a NPB component, allows the NPB DT to operate as a NPB configurator that monitors, controls and configures the NPB software at runtime.

Different from a common network bridge working in the second layer of the TCP/IP model which aims to forward data frames based on MAC addresses of devices, the NPB component as described in the present invention forwards and translates data from one application-layered protocol to another application-layered protocol so that several devices can communicate even if they are not using a same protocol.

For example, normally a robotic arm that supports the EtherNet/IP protocol cannot directly communicate with a Programmable Logic Controller (PLC) that supports the Modbus TCP protocol, and in general, the PLC cannot exchange data with the robotic arm. Advantageously, a NPB component of the invention is configured to support multiple protocols and allows forwarding and translating data from the Modbus TCP protocol to the EtherNet/IP protocol and reciprocally, thereby allowing the robot and the controller to collaborate.

Another example of using a NPB component of the present invention configured by a NPB software and controlled by a NPB DT lies on situations where several devices work under a same protocol but wherein each device have a different configuration. For example, a robotic arm and a mobile robot using a same protocol ROS2 (Robot Operating System version 2) and being respectively configured with a "ROS_DOMAIN_ID equal to 0" and a "ROS_DOMAIN_ID equal to 30", are normally not able to communicate. By installing in between the two devices a NPB component of the present invention configured to support those two ROS2 domains, the robotic arm and the mobile robot can then exchange data.

Generally, the present invention relies on the following principles:
- Allowing a model's designer to design a unique NPB model to describe in detail all required information and features of a NPB component.
- Using a code generation technique of model-driven engineering (MDE) to generate a NPB software and a NPB DT at the same time.
- Installing the NPB software on a NPB computer device and installing the NPB DT on a host computer device that is used to monitor, control, and configure the NPB component.

Advantageously, the complexity of a code generation operation of a NPB software and of a NPB DT software is hidden for the users. Users need only to design a unique NPB model and to execute a code generation operation by a simple click operation or command line input.

Still advantageously, as the NPB software and the NPB DT are generated by a unique model, the NPB software installed on a NPB computer device and the NPB DT installed on a host computer device share same network protocols and APIs for their communications. This means that the efforts required to deploy a NPB software on a NPB computer device and to deploy a NPB DT on a DT host computer device are drastically reduced to a single configuration operation allowing both components to work together. For example during a design phase, users/engineers can setup that data between a NPB computer device and a NPB DT host computer device are to be exchanged based on the WebSocket protocol and a predefined custom RESTful API schema. After executing a code generation operation, the two software components can communicate directly using the WebSocket protocol and the predefined schema.

Another advantage of the invention is when users have to modify or correct an error in the NPB software component or in the NPB DT software component. They only have to add, remove or modify the initial designed NPB model and generate it again after the correction. This enables coherence between the two software components. For example, when users want to add new routing nodes into a NPB component, they only have to add/declare those nodes in the initial designed NPB model and regenerate as a single operation the two updated software components (the NPB software component and the NPB DT software component). Likewise, if users want to change a network protocol between a NPB and a NPB DT, for example to change from WebSocket to HTTP, they only have to change the name of the protocol in the initial designed NPB model and to regenerate as a single operation the two updated software components.

To achieve the foregoing objects, a system, method and computer program product are provided in the appended claims.

Particularly, a system for runtime configuration of a Network Protocol Bridge 'NPB' device to be used in a network, the network comprising a plurality of devices operating under different communication protocols, the system comprising a computer device configured to run a model design tool, wherein the model design tool allowing to design a NPB model describing the NPB device, the computer device being further configured to generate in a single operation two distinct software components from the NPB model, wherein a first software component comprises code instructions for allowing implementation of a Digital Twin of the NPB device, and a second software component comprises code instructions for allowing configuration of the NPB device at runtime by the first software component.

Another object of the invention is a computer implemented method for runtime configuration of a Network Protocol Bridge 'NPB' device to be used in a network, the network comprising a plurality of devices operating under different communication protocols, the method comprising at least the steps of:
- designing a NPB model describing the NPB device with a model design tool installed on a computer device;
- generating in a single operation with the computer device two distinct software components from the NPB model, wherein a first software component comprises code instructions for allowing implementation of a Digital Twin of the NPB device, and a second software component comprises code instructions for allowing configuration of the NPB device at runtime by the first software component.

The invention further provides a storage medium having stored thereon a computer program which, when executed by a processor, implements the method of the invention.

The invention may be of interest in any industry domain that requires not only a NPB device but also a method to deploy and configure such NPB device rapidly and flexibly.

Particularly the invention may provide a solution to solve interoperability problems where devices use different industrial network protocols.

Further aspects of the invention will now be described, by way of preferred implementation and examples, with reference to the accompanying figures.

### Brief description of the drawings

The above and other items, features and advantages of the invention will be better understood by reading the following more particular description of the invention in conjunction with the figures wherein:
Fig. 1 shows a general system environment for operating the deployment method of the present invention in an example;
Fig. 2 is a flow chart of the main steps of the method of the present invention;
Fig. 3 is a screenshot of a graphical user interface from a digital model design tool according to an embodiment of the present invention;
Fig. 4 exemplifies an extract of a UML code representing a NPB model;
Fig. 5 shows an implementation of the system of the invention in a general manufacturing context;
Fig. 6 is a flow chart illustrating steps of operating a NPB device according to an embodiment of the present invention; and
Fig. 7 illustrates a NPB DT host device sending a configurable network message to get information on network interfaces of a NPB device according to an embodiment of the present invention.

### Detailed description of the invention

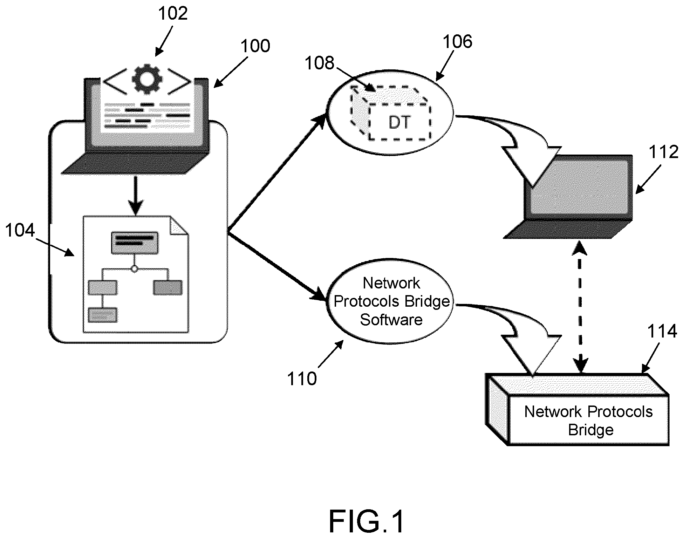

Going first to figure 1, a general system environment for operating the method of the present invention is illustrated in an embodiment.

A computing device 100 is configured to allow a user (not shown) to use a model design tool 102 installed on it, to design a NPB model 104 with information and features describing a Network Protocol Bridge (NPB) component 114 to be used in a network.

The computing device may be a portable computing device in the form of a notebook or a laptop computing device or a tabletop computing device including a touchscreen, camera, microphone, and loudspeaker, or a smartphone, or it may be a desktop computing device.

The computing device is further configured to allow automatically generating two distinct software components (106, 110) from the designed model.

A first software component 106, named Network Protocol Bridge Digital Twin software component or NPB DT component, is generated. The NPB DT component comprises code instructions for allowing an implementation of a Digital Twin 108 of a NPB device 114.

A second software component 110, named Network Protocol Bridge software component or NPB software or NPB component is generated. The NPB component comprises code instructions for allowing configuration of the NPB device at runtime by the NPB DT component.

The digital twin (DT) for NPB aims to monitor and configure the NPB device at runtime. In detail, an NPB DT monitors the routing nodes of the NPB device and can enable/disable the data flow of routing nodes or a network interface. It is extensible with other functions such as enable/disable a feature or adjusting a configuration parameter.

In an embodiment, the NPB device 114 is a router having multiple Network Interface Cards (NICs).

In another embodiment, the NPB device 114 is a general computer with a single NIC.

As it will be further described, the NPB software 110 is installed on the NPB device 114 and the NPB DT software 106 is installed in a NPB DT host computer 112.

A Digital Twin of a physical device is a digital representation that can represent one or several aspects of the device. Generally, synchronization between a DT and its physical asset is maintained by a bidirectional communication between them. There are several standards and methods to create DTs. For example, a 3D DT may be created by the tool XDE-Physics to represent a visualization aspect of an asset or an AAS DT may be created by the tool Papyrus4Manufacturing (P4M) to represent an operational aspect of an asset.

Asset Administration Shell (AAS) is an industrial-grade standard to deploy DTs for assets. A DT following this standard is called an AAS DT. A running AAS DT has an information model containing information of one or several aspects of its physical asset, each aspect being described in a submodel. A submodel contains submodel elements which can be properties, operations, files, etc. For example, a property describes an attribute or a characteristic of an asset and an operation describes a behavior of the asset.

The Industrial Digital Twin Association (IDTA) is an organization that develops and promotes the AAS standard, and that proposes many submodel templates. Submodel templates for network devices also exist, such as 5G transmitter and receiver templates to support building DTs for these two types of network devices.

In the context of the invention, the inventors have developed specific submodel templates for designing a NPB model.

A NPB model designed according to the principles of the invention requires at least two submodels: an Interfaces submodel and a Routing submodel.

There is no known prior art of generating submodel template for data routing.

The Interfaces submodel describes properties associated with available interfaces of a NPB device. It can be "modbustcp", "ethernetip", "uafx", and "ros2" interfaces. These properties have Boolean values which can be True or False. If the value is True, then the interface is active, and data flows can pass this interface. If the value is False, then the interface is deactivated, that is, data flows cannot pass this interface.

The Routing submodel describes properties associated with available routing nodes of a NPB device. These properties have formatted labels. The properties have Boolean values. If the value is True, then the routing node is active, that is, data flows can pass this routing node. If the value is False, then the routing node is deactivated, that is, data flows cannot pass this routing node.

In addition to the two fundamental submodels Interfaces and Routing, other submodels such as Security and QoS can be defined to monitor and configure other aspects of a NPB component.

"Papyrus4Manufacturing" (P4M) is a tool to practice model-driven engineering (MDE). P4M allows creating models for describing software, a system or a module of a system, and generating code from the models. This tool allows users to model AAS DT of a device and then generate programming code (e.g. Java, C, Python, etc.) to build and run the AAS DT of the device. AAS DTs generated by this tool are normally able to communicate with their assets. However, the fact that the AAS DTs can configure or not their assets, depends on the assets themselves. In other words, an asset can communicate with a DT and allows it to read and write a variable of the asset, but this variable can have no effect to the asset itself. It is the software inside the asset that can decide if this variable has any effect on the asset or not. It means that the coherence between the DT and the software running inside the asset are important. For example, a DT can set a variable "state_led" of a Raspberry Pi integrated with a led. The DT can set the value of the variable "state_led" to true or false. But the led can be light up or light down depending also whether this variable is associated to the state of the real led or not.

As regard to the present invention, in a novel and inventive approach, the inventors propose that the NPB software offers functionalities for data routing (i.e. translating and forwarding of data), and that the NPB DT software offers functionalities for activating or deactivating routing nodes declared in the NPB component that runs the NPB software.

Generally, a routing node includes information that enables a network device to forward data from a sender on one interface to a receiver on another interface. There is no known prior art of generating a Digital Twin for a Network Protocol Bridge.

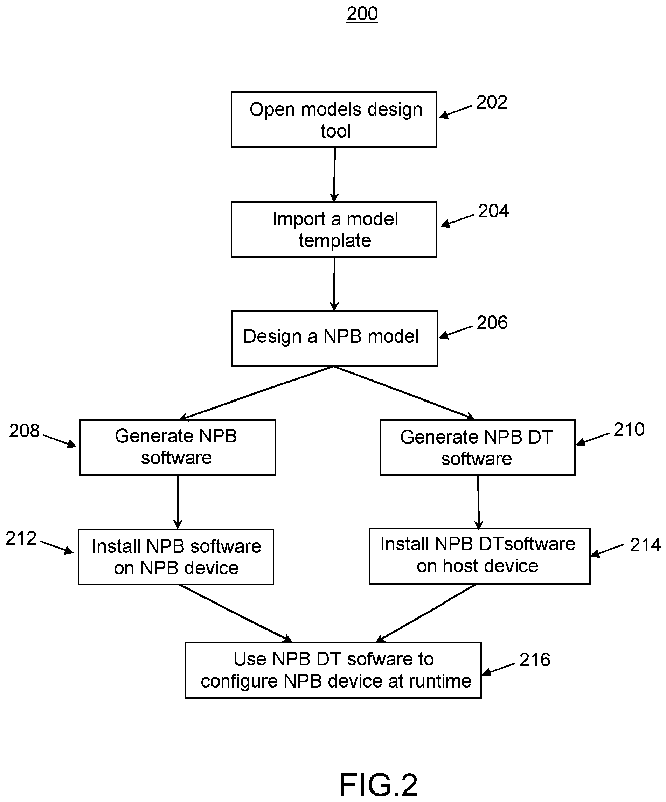

Going to figure 2, a flow chart of the main steps 200 for generating a network protocols bridge device with an associated digital twin according to an embodiment of the present invention is described.

In a first step 202, a user launches a model design tool installed on a computer device of the development environment.

In an embodiment, the user starts the P4M tool.

In an optional next step 204, the user may import an existing model template if the design tool provides such import function. For example, the user may download from the website of the P4M tool, an AAS bridge template which may already have several submodels.

P4M provides an environment for users to design and generate NPB DT using friendly modeling languages and diagrams, such as the UML Class Diagram.

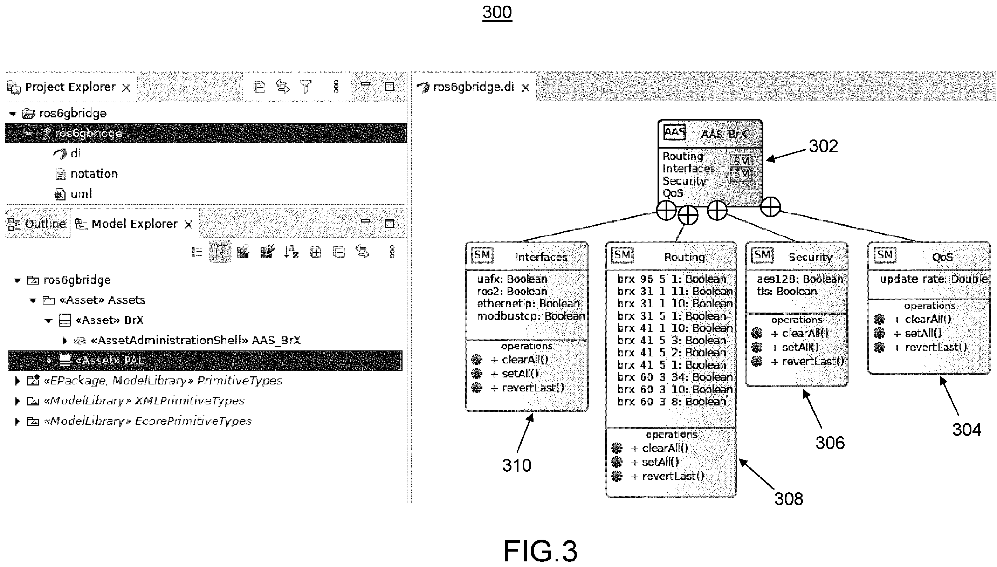

Figure 3 shows a screenshot 300 of a graphical user interface (GUI) in the P4M design tool from which a user may select and open an AAS bridge template 302 which provides four submodels templates, namely a "QoS" submodel template 304, a "Security" submodel template 306, a "Routing" submodel template 308 and an "Interfaces" submodel template 310.

This example is provided for the purpose of a clear description only and not as a limitation, and a skilled person would apply the principles described to other design tools than P4M, and different submodel templates.

This example sets a scenario where four devices operate each under a different network protocol, i.e. the Modbus TCP protocol, the OPC UA FX protocol, the EtherNet/IP Class 1 and the ROS2 protocol.

The Modbus TCP protocol relies on request-response (or client-server) messaging pattern; OPC UA FX protocol relies on publish-subscribe (or pubsub) messaging pattern; EtherNet/IP Class 1 protocol relies on synchronization (or cyclic) messaging pattern; and ROS2 protocol can use both request-response and pubsub messaging patterns. Still as an example, the network protocol between the NPB component and its associated NPB DT component is the WebSocket protocol.

Back to figure 2, in a next step 206, the user completes the design model with all information in each submodel to design a NPB model.

In an embodiment, each submodel template for designing a NPB model comprises an "Operation" section for setting predefined default functions, such as:
- a "clearAll" function to set values of all properties in the same submodel to "false". For example, when the "clearAll" operation of the submodel "Interfaces" is called, the value properties "uafx", "ros2", "ethernetip", and "modbustcp" are set to "false". As a consequence, all relevant network interfaces (OPC UA FX, ROS2, EtherNet/IP Class 1, Modbus TCP) of the NPB component are deactivated.
- a "setAll" function to set values of all properties to "true";
- a "revertLast" function to undo the last edit on the properties of the submodel.

In the example of figure 3, for the "QoS" submodel template 304, a user can add a property "update rate" to activate/deactivate or to modify a quality of service related to the update rate. Such update rate relates to a special function of the NPB component that demands all devices connecting to the NPB device to update its data periodically. For example, a NPB connecting to a device using EtherNet/IP implicit message mode requires an update rate for the data synchronization rate between them. The detail of this function is out of the scope of the invention. The user can add other QoS properties to the submodel.

For the "Security" submodel template 306 which contains properties to activate or deactivate security of the network bridge, a user can set a "AES128" property to "true" meaning that the NPB component will encrypt data using the AES128 standard. The user can set a "TLS" property to "true" meaning that the NPB component encrypts the TCP transport layer communication using the TLS protocol. The user can add other security properties to the submodel template.

For the "Routing" submodel template 308, the formats of routing nodes are defined. The goal of a routing format is to create a unified identifier to translate data received on a first protocol to a second different protocol.

Each communication protocol has a method to identify their data sources, thus the NPB device needs a mechanism to unify them so it can forward data from one interface to another. This mechanism must be able to cover all data source identifications of all related communication protocols. Each data source identification unified in the NPB model is called a routing node.

When a NPB component receives a network message, this message contains data and information related to the identifier of a data target or a data source (e.g. an address). The latter are used to constitute a routing node.

There can be many ways to define the format(s) of routing nodes according to use cases. However, a valid format must contain information allowing a NPB device to forward data between all interfaces supported by the NPB device.

In an embodiment as exemplified on figure 3, the routing submodel 308 defines the format of routing nodes as follow:

| |
|---|
| <FORMAT_STANDARD>_<DEVICE_ID>_<GROUP_ID>_<DATA_SOURCE_ID> |
| In which: |
| <FORMAT_STANDARD>: name and version of the standard of this format |
| <DEVICE_ID>: identification of the device |
| <GROUP_ID>: identification of an abstract group that can classify data source |
| <DATA_SOURCE_ID>: identification of a data source |

The 'FORMAT_STANDARD' field is defined as being a "BRX" format.

The user declares eleven routing nodes (illustrated by eleven 'brx' lines).

The 'DEVICE_ID' field provides an identifier or a unit id of devices, such as "31" associated to a Modbus TCP slave device or "41" associated to a ROS2 device or "60" associated to an EtherNet/IP adapter device or "96" associated to an OPC UA FX device.

The 'GROUP_ID' field defines a data type, such as "1" for Boolean or "3" for Byte or "5" for two-bytes unsigned integer.

The 'DATA_SOURCE_ID' field defines an identification of a data source, i.e. an address or an identifier of a data source depending on the protocol.

If a routing node having a Boolean value set to "true" at the control plane level, this means that this active routing node defined in the routing submodel of the NPB device by a format "brx_96_5_1" is active for any device of the manufacturing network having a unit identifier equal to "96", a data type of two-bytes unsigned integer and a data source identifier equal "1".

For example, if an OPC UA FX device, i.e. a device operating under the OPC UA FX protocol, monitors the temperature of a room and publishes a sensed data value of 20 (the current value of the temperature), this value is put in a message containing a publisher id, a writer group id and a dataset writer id, respectively equal to 96, 5 and 1. In the OPC UA language, a "publisher id" is the identifier of a device that publishes data, a "writer group id" is the identifier of an abstract group of dataset writers that share same characteristics (e.g. a group of dataset writers supporting Boolean value data or a group of dataset writers supporting integer value data) and a "dataset writer id" is the identifier of a module that formats and sends the data. A NPB device receiving this message extracts the data value (i.e. 20) and set it in a variable "cached_value" of the routing node label "brx_96_5_1". In an embodiment, each routing node contains a "cached_value" register to temporary store the latest value passing the routing node.

In another embodiment, a NPB device can have a persistent storage (e.g. a database) to store all values that have passed the routing node. In this sense, the data can be used as logged data for debugging, error tracking, etc...

Once the value is stored, if for example later a Modbus TCP master device wants to read this routing node, it sends a command to the NPB device and requests reading a register address (equals to two-bytes unsigned integer) at address 1 of the device with "unit id" equal to 96. After receiving the command, the NPB component retrieves the data value 20 from the variable "cached_value" of the routing node, put it into a Modbus TCP response message and sends the message to the Modbus TCP master device.

For the "Interfaces" submodel 310 shown on figure 3, the user can add the properties for the four network protocols (OPC UA FX, Modbus TCP, ROS2, EtherNet/IP Class 1). These properties are Boolean and can be set to "True/False", thereby allowing a network administrator to activate/deactivate a corresponding network interface.

Back to figure 2, after the design of the NPB model is ended the process allows automatically generating in a single operation two software components from the source code of the NPB model, i.e. a first NPB software component in step 208 and a second NPB DT software component in step 210.

In an embodiment where the P4M design tool is used to create a NPB model, the process allows using a UML source code with XML format to generate in a single operation a NPB software as a Java code file, and a NPB DT software component as a Java code file.

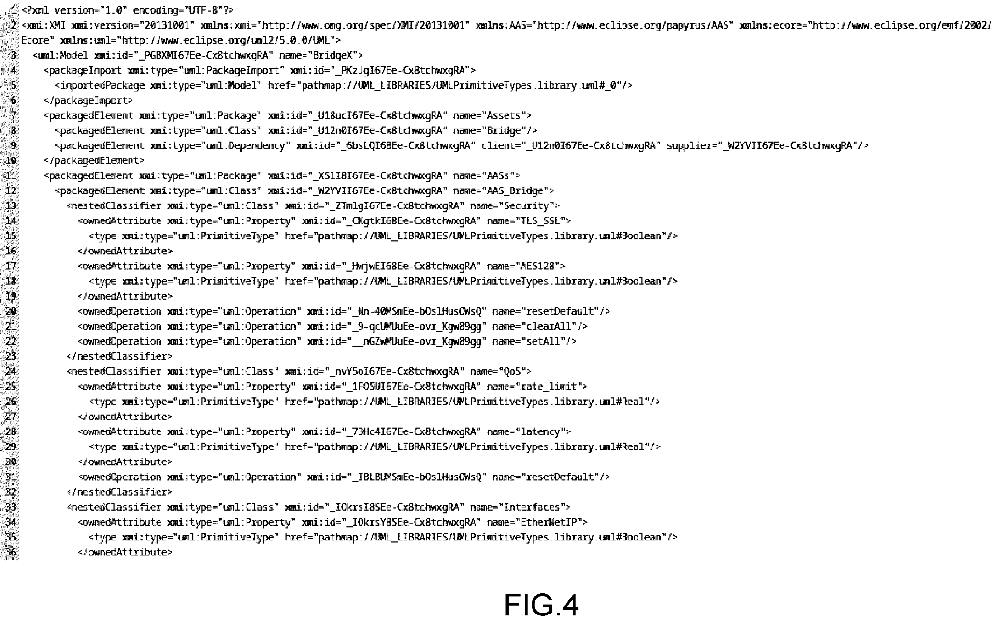

Figure 4 exemplifies an extract of a UML code representing a NPB model. As one knows the Unified Modeling Language (UML) is a general-purpose modeling language that is intended to provide a standard way to design a system.

In other embodiments the two software components are generated as C/Python code files. Alternatively, the two software components are generated as other programming language code files.

In an embodiment, the GUI is configured to allow a user activating the automatic generation of the two software components in a single operation, as a one-click operation.

In another embodiment, the GUI is configured to provide two different functions to generate separately each software component, i.e. a one-click operation to generate a NPB software component and another one-click operation to generate a NPB DT software component.

A user may for example, (left) click a "Generate NPB and AAS NPB" button (alternatively a vocal command may also be implemented) to generate by a single operation an AAS file for the NPB component and a NPB software.

A user may for example (left) click a "Generate AAS" button (alternatively a vocal command may also be implemented) to generate a AAS file for the Network Protocol Bridge device, and also (left) click a "Generate bridge" button (alternatively a vocal command may also be implemented) to generate a NPB software.

In yet another embodiment, a GUI is configured to provide a field to allow a user to enter a command line to initiate the generation of the two software components.

After the two software components are generated in a source code format, the process allows compiling the source codes to generate a binary file for each software component.

In an embodiment, this step can be merged with the previous step if the development environment tool supports generation of binary automatically.

In an embodiment, the binary can be put in a Docker and is launched when the Docker container is executed if the development environment tools support it.

Docker is an open platform for developing, shipping, and running applications. Docker provides the ability to package and run an application in a loosely isolated environment called a container.

Back to figure 2, next step of the process allows installing each runnable software (i.e. the binary files of the NPB software and of the NPB DT software) on a respective computer device.

As such, in step 212, the NPB software is installed on a Network Protocol Bridge computer device (i.e. device 114 of figure 1), and in step 214, the NPB DT software is installed on a DT host computer device (i.e. device 112 of figure 1).

In an embodiment, the computers are equipped with a pre-installed "Docker framework" that allows running the NPB software and the NBP DT software as "Docker containers", thereby improving the time to deploy NPB and NBP DT devices.

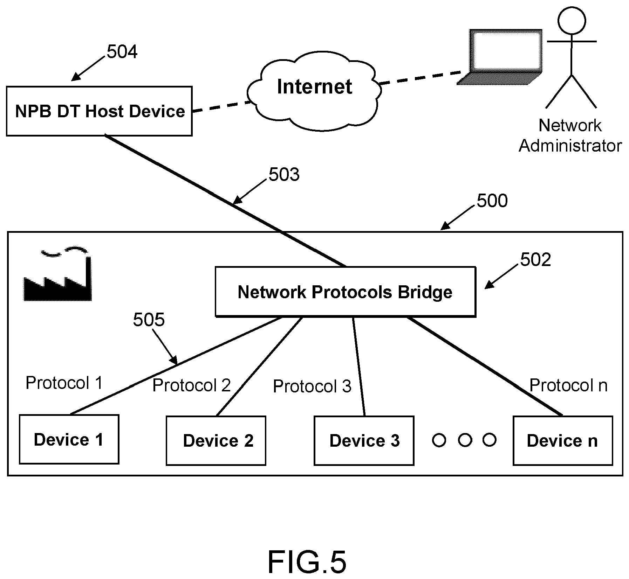

In an example described in reference to figure 5, an implementation of the system of the invention is shown in a general manufacturing context. A Raspberry Pi (RPI) installed Ubuntu is used as a NPB computer 502 running a NPB software and a general computer 504 is used as a NPB DT host device running a NPB DT software generated according to the method of the invention.

Raspberry is known as being a small and compact single-board computer having basically a CPU, a RAM, a ROM, a SD card socket and multiple ports (four USB ports, RJ45, HDMI, etc.).

The NPB computer 502 running the NPB software generated in a single operation with the NPB DT software according to the method of the invention, comprises networking medium (e.g. cable, wifi, etc.) 503 to establish communication with the NPB DT host device 504.

For example, RPI 502 is connected to the NPB DT host device 504 by a Wifi link of a local area network (LAN) with a configuration of an IPv4 address network, such as 192.168.57.0/24.

The communication protocol between the RPI device 502 and the NPB DT host device 504 is for example WebSocket (while it is not limited to this example and other network protocols could be implemented).

The RPI is further connected to industrial devices (Device 1 to Device n) of manufacturing network by networking medium 505, for example Ethernet cables of a local area network (LAN) with a configuration of an IPv4 address network, such as 192.168.56.0/24.

Back to figure 2, next step 216 of the process allows the DT host device running the NPB DT software monitoring, controlling, and configuring at runtime the NPB software installed on the NPB device.

In detail, when a NPB software and its associated NPB DT software are running, a network communication between them is established. Depending on the communication protocol between them, the operations of monitoring, controlling and configuring can be different.

Monitoring operations mean that the NPB DT component can read the properties associated with the NPB component. For example, the NPB DT component can read properties of a label "brx_96_5_1" related to a routing node defined in the NPB component to verify whether the node is activated or not (whether a value is set at True or at False).

Controlling operations mean that the NPB DT component can call operations so that the NPB component acts with a defined behavior. For example, the NPB DT component can restart the NPB component.

Configuring operations mean that the NPB DT component can change the configuration of the NPB component. For example, the NPB DT component can write a value True/False for a property related to a routing node labelled "brx_96_5_1".

The NPB DT host device 504 is also connected to the Internet to enable network administrators to interact with it remotely. Thus, instead of having a network administrator being present at a manufacturing plant 500 to connect to the RPI device 502 and manage the network between industrial devices, the invention allows that a network administrator who needs to communicate with a NPB DT host device 504 is able to manage remotely the network of the manufacturing plant. As such, when network administrators want to close a network interface, for example close a EtherNet/IP interface, they only have to set the value of the property "ethernetip" of the Routing submodel into False.

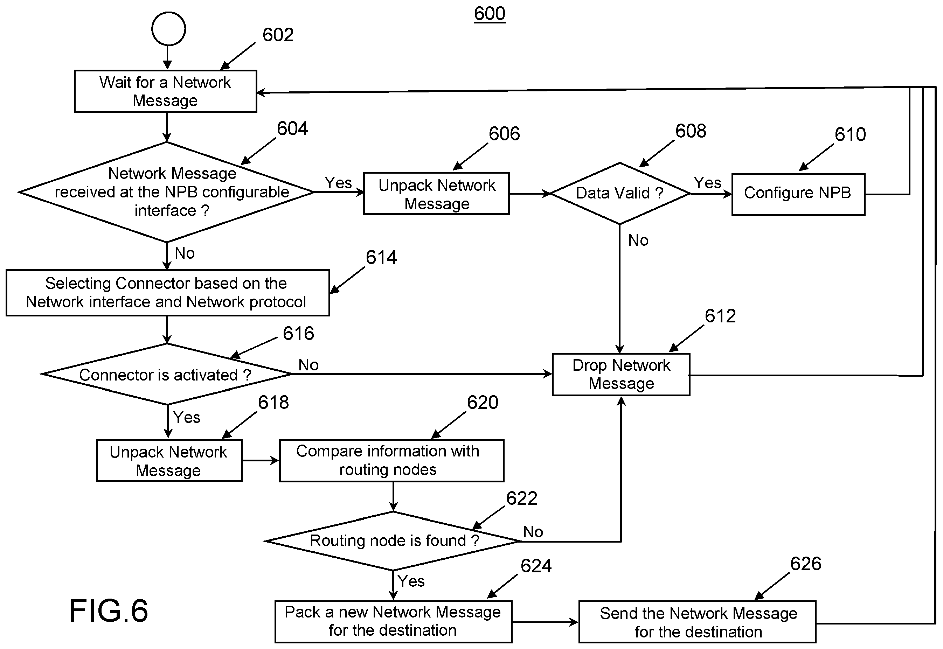

Going to figure 6, a flow chart for operating a NPB device is described, and detailing steps 600 to bridge network protocols between network devices according to an embodiment of the present invention.

Initially, on step 602, the process allows NPB software installed in a NPB device of a network to wait for a new message from the network.

Next on step 604, the process allows the NPB device to determine if the message is a configurable network message at control plane or a data network message at data plane, according to the network protocol used to transport the network message and the network interface that receive the message.

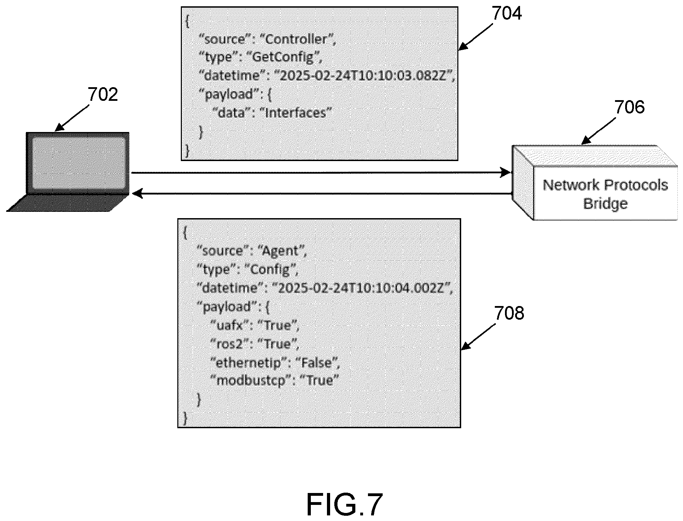

Fig. 7 exemplifies a NPB DT host device 702 sending a configurable network message 704 to get information on network interfaces of a NPB device 706 running a NPB software component generated according to the generation process of the invention. The message is in JSON format in the example. The NPB device responds with a responding message 708 containing values for each of four properties (uafx, ros2, ethernetip, modbustcp) which correspond to the state of four interfaces of the NPB device 706.

Back to step 604 of figure 6, if the received message is a configurable network message (branch Yes), the process allows on step 606 to unpack the message, then to check on step 608 if the data content is valid (e.g. a configurable network message is not valid if it does not includes a field "type" representing a type of command such as "SetConfig", "GetConfig", etc.). If the data content is valid (branch Yes) the process allows on step 610 to use the information contained in the message to configure the NPB component.

For example, routing nodes of the NPB component may be activated/deactivated if a configurable network message includes a type of command "SetConfig".

In case the data content is not valid (branch No of step 608), the message is dropped (step 612).

Back to step 604 of figure 6, if the network message is not a configurable message (at control plane) but is a data network message (branch No), i.e. a message at data plane with data for one or several devices in the network, then the process allows the NPB device to process it accordingly based on the network protocol.

On a next step 614, the process allows selecting an appropriate connector based on the network interface and the network protocol. For example, a Modbus TCP message sent from a Modbus TCP master device, will be processed by a Modbus TCP connector.

On next step 616, the process allows checking if the selected connector is activated. In case the connector is off or no connector is found (branch No), the message is dropped (step 612).

In case the selected connector is activated, (branch Yes of step 616), the process allow unpacking the message (step 618).

The unpack operation allows the connector extracting information from the message such as extracting a "unit_id", a data type, a data source id, and a data value. Based on the unit-id, the data type and the data source id, the process allows on a next step 620 the NPB device to compare the extracted information with information contained in the routing nodes listed in the NPB software.

On a next step 622, the process allows determining if a routing node matches the extracted routing information.

In case no routing node is found or is deactivated (branch no), the message is dropped (step 612).

In case a routing node is found and is activated (branch Yes), the process allows retrieving the destination of the network message, and generating a new message on step 624. For example, if the extracted information corresponds to an "OPC UA FX" data source, the NPB device uses a connector related to "OPC UA FX" to add the data value into a new "OPC UA FX" network message.

Next on step 626, the process allows the NPB device sending the received network message to the destination using the corresponding protocol.

In an embodiment, during the steps of packing/unpacking the network message, the process may use a data encryption security method, a transport layer security method, etc. if these methods are activated at the configuration.

Other features may be installed on the NPB device such as, a security mechanism to encrypt data with an encryption standard to secure the data communication, another feature allowing the NPB device to record passing messages and store them on the historical database for data tracing and debugging.

Several steps of the method of the present invention may be implemented as a computer program product at any possible technical detail level of integration. The computer program product may include a computer readable storage medium (or media) having non transitory computer readable program instructions thereon for causing a processor to carry out aspects of the present invention. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing.

## Claims

1. A system for runtime configuration of a Network Protocol Bridge 'NPB' device (114) to be used in a network, the network comprising a plurality of devices operating under different communication protocols, the system comprising a computer device (100) configured to run a model design tool (102), wherein the model design tool allowing to design a NPB model (104) describing the NPB device, the computer device (100) being further configured to generate in a single operation two distinct software components (106, 110) from the NPB model, wherein a first software component (106) comprises code instructions for allowing implementation of a Digital Twin of the NPB device, and a second software component (110) comprises code instructions for allowing configuration of the NPB device at runtime by the first software component.

2. The system of claim 1 wherein the NPB model comprises submodels templates to describe the NPB device.

3. The system of claim 2 wherein the NPB model comprises a Routing submodel template to describe formats of routing nodes.

4. The system of claim 2 or 3 wherein the NPB model comprises an Interfaces submodel template to set properties of network protocols.

5. The system of anyone of claims 2 to 4 wherein the NPB model further comprises a Quality of Service 'QoS' submodel template to define properties of an update rate for all devices connecting to the NPB device to update its data periodically.

6. The system of anyone of claims 2 to 5 wherein the NPB model further comprises a Security submodel template to define security properties of the NPB device.

7. The system of anyone of claims 2 to 6 wherein the submodel templates comprise an Operation section for setting predefined default functions.

8. The system of anyone of claims 1 to 7 wherein the computer device comprises a graphical user interface configured to allow a user activating as a one-click operation a generation of the two software components.

9. The system of anyone of claims 1 to 8 further comprising a host device (504) for installing the first software component and a NPB computer device (502) for installing the second software component before runtime, the host device and the NPB computer device being operatively communicating under a common protocol defined in the NPB model.

10. A computer implemented method for runtime configuration of a Network Protocol Bridge 'NPB' device to be used in a network, the network comprising a plurality of devices operating under different communication protocols, the method comprising at least the steps of :
- designing (206) a NPB model describing the NPB device with a model design tool installed on a computer device;
- generating (208, 210) in a single operation with the computer device two distinct software components from the NPB model, wherein a first software component comprises code instructions for allowing implementation of a Digital Twin of the NPB device, and a second software component comprises code instructions for allowing configuration of the NPB device at runtime by the first software component.

11. A storage medium having stored thereon a computer program which, when executed by a processor, implements the method of configuring at runtime a Network Protocol Bridge 'NPB' device according to claim 10.
